# EUROPEAN PATENT SPECIFICATION

(11) **EP 1 566 665 B1**
(45) Date of publication and mention of the grant of the patent: **11.08.2010**
(21) Application number: 04003872.1
(22) Date of filing: 20.02.2004
(51) Int. Cl.: G01W 1/10, G01C 21/20, G08G 1/0967

(54) **Apparatus and method for providing ambient parameter data and for determining weather information**
Vorrichtung und Verfahren zum Erzeugen von Umgebungsparametern und zum Bestimmen von Wetterinformationen
Dispositif et procédé pour assurer des paramètres ambiants et pour déterminer des données météorologiques

(43) Date of publication of application: 24.08.2005
(73) Proprietor: Harman Becker Automotive Systems GmbH, 76307 Karlsbad (DE)
(72) Inventor: Brülle-Drews, Christian, 22159 Hamburg (DE)
(74) Representative: Grünecker, Kinkeldey, Stockmair & Schwanhäusser Anwaltssozietät

(56) References cited:
- EP-A1- 1 087 206
- EP-A2- 1 216 888
- DE-A- 19 700 353
- US-A1- 2002 039 072

## Description

The invention is directed to a method and apparatus for providing ambient parameter data of a vehicle and to a method for determining weather information.

Weather information is of high pertinence to drivers of any kind of vehicle, in particular, of road vehicles such as cars, buses or trucks. Depending on this information, a road vehicle driver, for example, can select a preferred route, make decisions regarding specific equipment (e.g. winter tires, snow chains) and possibly adapt his driving style (e.g. drive more slowly if there is danger of black ice).

Usually, current weather information and weather forecasts are received by drivers via radio. Besides the current weather information and weather forecast in the news, digital radio channels become more and more common. For example, the traffic message channel (TMC) allows processing and permanent transmission of traffic messages and possibly also weather information in parallel to an analogue radio channel. These messages can be stored by a corresponding TMC receiver and output acoustically and/or on a display.

However, the disadvantage of this kind of weather information is its impreciseness. Usually, the current weather information and the forecast are drawn up for a large region within which the actual conditions can vary significantly. Furthermore, this information is not very often updated on a daily basis and thus, of little use.

On the other hand, many cars are equipped with sensors measuring different ambient parameters such as the temperature, the brightness or the precipitation. The measured values of these parameters are either presented to the driver or used to control specific devices such as the windscreen wiper or the headlights. Some of these sensors are also used to inform the driver on the danger of black ice or that the road is slippery, for example. This information, however, is always restricted to the current position of the vehicle.

An aircraft weather information system is disclosed in US 2002/0039072. Local atmospheric data is collected by aircraft weather radar systems and other aircraft sensors and is downlinked to a ground station. The downlinked data is assembled with other weather information and an up to date atmospheric model is developed. Weather products based on the up to date atmospheric model are uplinked to the aircraft and displayed in the cockpit. The uplinked weather data may be used to alert the crew to potential hazards along the route of flight. The crew can use the alert and any additionally requested data to decide whether or not to make a change to the aircraft altitude etc.

A system and a method for diagnosing, controlling and transmitting security relevant system data variables of a motor vehicle are disclosed in DE 197 00 353.

A standard interface for vehicles is known from EP 1 216 888. This system comprises different sensors such as a temperature sensor and provides the corresponding data together with geographical data to a standard sensor interface.

In EP-1087206 an optimum route is searched whilst considering weather information.

In view of the foregoing, it is the problem underlying the invention to overcome the above mentioned drawbacks and to provide a method and an apparatus for determining a route by a navigation system. This problem is solved by a method according to claim 1 and a navigation system according to claim 11.

Accordingly, a method for providing ambient parameter data of a vehicle is provided, comprising the steps of
a) automatically determining a value of at least one ambient parameter via an ambient parameter sensor of a vehicle,
b) automatically initiating transmitting the value of the at least one ambient parameter to an external server.

An "ambient parameter" is a parameter for specifying or characterizing the ambient conditions; ambient parameters comprise temperature, pressure, humidity, brightness, wind velocity, sight range, but also a parameter indicating whether the road surface is slippery, etc. Thus, the value of an ambient parameter can be of different type such as numerical or Boolean type. The vehicle is a road vehicle such as a car, a bus or a truck. An "external server" is a server not being part or being outside of the vehicle, particularly a stationary server.

With the method according to the invention, it is possible to collect the values of ambient parameters using sensors that are integrated in a vehicle. The measured parameter values are transmitted to a server where they can be further processed in order to provide weather information for a corresponding region. Weather information comprises current and/or forecast information regarding ambient parameters in a particular region or area. Particularly, if a plurality of vehicles is providing ambient parameter data in this way, a large amount of data can be provided from different positions and being updated regularly in order to provide weather information with high accuracy and being up-to-date.

Furthermore, since many vehicles are provided with parameter sensors for different purposes anyway, this method does not require any costly installation of these sensors. The data of sensors already present in a vehicle are further used for an additional goal. Of course, in order to increase the accuracy and/or the diversity of the parameters, additional sensors can also be provided in a vehicle.

Step a) of this method can comprise automatically determining a position of the vehicle correlating with a determined value of at least one ambient parameter and step b) can further comprise automatically initiating transmitting the position to the external server. In this way, the parameter data can be used and further processed by the server together with the correlating position of the vehicle, i.e. the position where the value was measured or determined, which improves the precision and reliability of the resulting weather information. In particular, positions correlating with each determined value can be determined.

Particularly, determining a position can be performed via a position determining means of the vehicle, in particular, via a navigation system. The use of a position determining means already present in a vehicle further simplifies the method. In particular, nowadays, many vehicles are provided with navigation systems enabling to determine a current position (correlating to the value of the at least one ambient parameter) of the vehicle using satellite information and/or movement sensors.

According to an alternative, determining a position of the vehicle can be performed via an external position determining means. In such a case, the method can also be performed even if the vehicle is not equipped with a position determining means such as a navigation system. In the case of road vehicles, for example, this can be achieved using corresponding detection devices provided at different locations of a road. For example, stations for automatic toll collection that register passing vehicles or beacons could be used. In this case, step b) can comprise automatically initiating transmitting the value to the external position determining means. From this external position determining means, then, the value of the ambient parameter can be further transmitted to the server together with the position of the external position determining means. Alternatively, the position of the external position determining means can already be known to the external server such that only the value or the ambient parameter together with an identifier identifying the external position determining means is to be transmitted to the server.

Step b) can further comprise automatically combining the value of the at least one parameter and the position into one signal to be transmitted. Transmitting a combined signal simplifies the further processing and the assigning of the parameter value to a position by the external server.

Step a) of the above described methods can be performed using a thermometer, barometer, precipitation sensor, brightness sensor, slip sensor, sight range sensor, wind sensor, and/or weather radar of the vehicle. These are possible sensors that are partly already mounted in a vehicle or can be installed without much effort.

Step b) can comprise automatically initiating transmitting via a wireless data link. Transmitting via a wireless data link can be via telephone, radio, microwave, visible light, infrared, etc. This allows transmitting parameter values and/or position coordinates in a simple way. In particular, most vehicles are already equipped with a telephone such as a mobile phone.

In the above-described methods, step a) and/or step b) can be performed in regular time intervals and/or dependent on a position of the vehicle and/or upon receipt of an external triggering signal.

In the simplest case of the above alternatives, step a) and/or step b) are repeated after predetermined time intervals yielding an ongoing measurement and transmittance of the parameters. Alternatively or additionally, a value of a parameter can be determined if the vehicle is at a predetermined position wherein the position can be predetermined in different ways such as by its coordinates or by the type of location. For example, a parameter value can be determined every time a car crosses a bridge or is on the road in a woodland. Furthermore, step a) and/or step b) can be performed upon receipt of an external triggering signal stemming, for example, from the external server or an external position determining means that is passed by the vehicle.

Furthermore, the present invention provides a method for determining weather information by a server comprising the steps of:
a) receiving a value of at least one ambient parameter from at least one vehicle, in particular, from a plurality of vehicles,
b) receiving a position correlating with a value of at least one ambient parameter,
c) automatically determining weather information data by the server using the transmitted at least one ambient parameter of the at least one vehicle and the position correlating with the value of the at least one ambient parameter.

In this way, weather information data, particularly comprising current values of ambient parameters and/or weather forecast data, can be determined for a small region or area surrounding the position correlating with a value of at least one ambient parameter. This improves the general weather information based on stationary meteorological offices and allows a much higher accuracy. In order to determine the weather information data, the value of ambient parameters transmitted by one or several vehicles and/or data from stationary meteorological offices and/or data from other sources such as satellites can be combined. Preferably, positions correlating with each value of at least one ambient parameter can be received in step b).

The server can comprise at least one receiving unit for receiving parameter data and/or position data and at least one processing unit for processing the parameter data and the position data to obtain weather information data.

This method can further comprise transmitting weather information data to a vehicle.

The vehicle transmitting an ambient parameter value and the vehicle receiving weather information data can, but need not be, the same. This allows to provide current weather data and weather forecast data for a small area using data received from vehicles in this area and, in return, to provide vehicles with highly accurate and up-to-date weather data for a region they are located in or they are planning to visit.

The step of transmitting weather information data can be performed upon a request, in particular, comprising position data, of the vehicle. Thus, vehicles being equipped with a corresponding receiving and processing device can request weather information data, for example, on a region they are located in or to which the driver plans to travel by transmitting position data (e.g., one or several positions) identifying the desired region to the server.

The invention further provides a method for determining a route by a navigation system, comprising
receiving weather information determined by the above described method,
determining a route taking into account the received weather information according to a predetermined weather condition criterion.

Navigation systems are known in the art and determine a route based on a starting point, a destination point and electronic map data (e.g., road map data in the case of car navigation systems). Weather information determined as described before is highly accurate on a small scale (in contrast to traditional weather information) and, thus, can be taken into account when determining a route.

For road vehicles, a weather condition criterion can be based, for example, on parameters such as black ice, visibility etc. E.g., if on a road black ice was determined, this road can get a penalty or not considered at all when determining the route.

Receiving weather information can be preceded by initiating transmitting position data for which weather information is requested to an external server. The position data is used to identify one or several regions for which weather information is required.

In the above methods, determining a route can comprise determining a journey time taking into account the received weather information. Since the weather conditions along a determined route influence the journey time, a more precise time estimation can be obtained in this way.

The invention also provides an apparatus for providing ambient parameter data of a vehicle comprising:
receiving means configured to receive a value of at least one ambient parameter provided by an ambient parameter sensor of the vehicle,
initiating means configured to automatically initiate transmitting the value of the at least one ambient parameter to an external sever.

Such an apparatus enables performing the above-described method. In particular, such apparatus can be mounted in vehicles and allow to provide a large amount of ambient parameter data for determining precise and up-to-date weather information.

The receiving means of the apparatus can be configured to further receive a position correlating with a determined value of at least one ambient parameter provided by a position determining means of the vehicle, in particular, a navigation system, and the initiating means can be configured to automatically initiate transmitting the position to the external server.

The position determining means can comprise satellite-receiving means for receiving satellite signals (for example, GPS signals) and/or movement sensors such as a gyroscope.

The initiating means can be configured to combine the at least one parameter and the position into one signal to be transmitted.

Furthermore, the initiating means can be configured to initiate transmitting via a wireless data link.

The above-described apparatus can further comprise a triggering means configured to provide a triggering signal to at least one ambient parameter sensor of the vehicle to provide the value of the ambient parameter. In this way, the apparatus may control the parameter sensor and request a parameter value if desired.

The triggering means can be configured to provide the triggering signal in regular time intervals and/or dependent on a position of the vehicle and/or upon receipt of an external triggering signal.

Furthermore, the invention provides a vehicle, in particular, a road vehicle, comprising an apparatus as described before.

Further features and advantages of the present invention will be described in the following with reference to the figures.
- Fig. 1: illustrates an example of an arrangement of an apparatus for providing ambient parameter data connected to different sensors,
- Fig. 2: illustrates schematically an example for the interplay between a vehicle and an external server,
- Fig. 3: is a flow diagram of an example of a method for providing ambient parameter data,
- Fig. 4: is a flow diagram of an example of a method for determining weather information by a server, and
- Fig. 5: is a flow diagram of an example of determining a route using weather information data.

It is to be understood that the following detailed description of different examples as well as the drawings are not intended to limit the present invention to the particular illustrative embodiments; the described illustrative embodiments merely exemplify the various aspects of the present invention, the scope of which is defined by the appended claims.

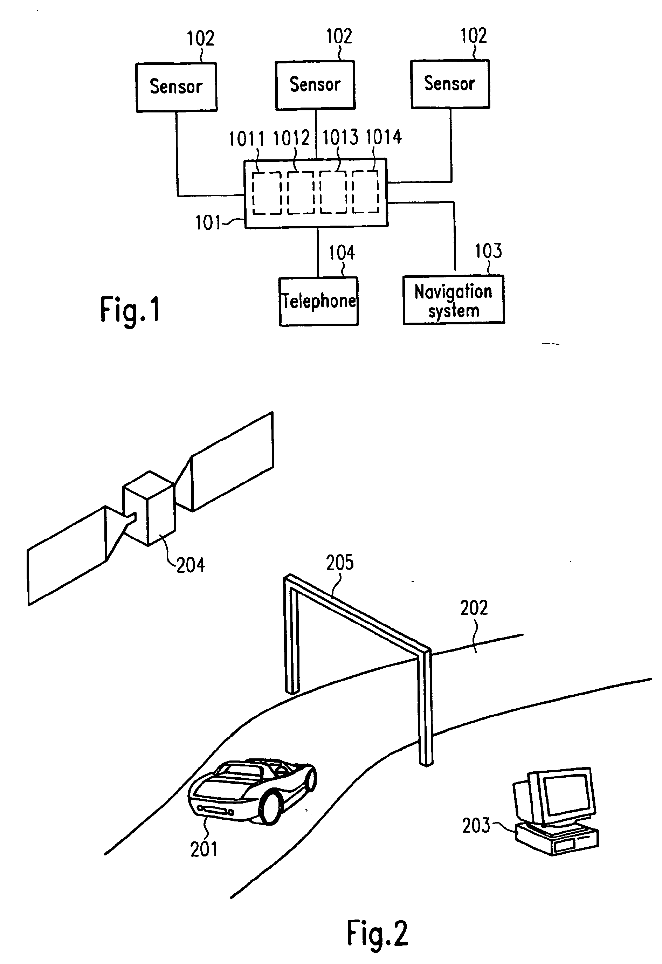

In Fig. 1, an example of an apparatus 101 for providing ambient parameter data of a vehicle is shown. This apparatus is connected to several ambient parameter sensors 102. Depending on the type of vehicle (e.g., car, ship, plane, train), different sensors 102 can be provided. In particular, the apparatus 101 can be connected to sensors 102 for temperature, pressure, humidity, precipitation, wind speed, visibility, brightness, fog, slip, low sun, etc.

As it is schematically shown in Fig. 1, the apparatus 101 comprises a triggering means 1013 for triggering the sensors 102. Upon receipt of the triggering signal, a sensor measures or determines a corresponding parameter value. Such a parameter value is transmitted to the apparatus 101, which also comprises a receiving means 1011 for receiving the parameter value. The apparatus 101 further comprises a memory 1014 for storing a received parameter value. A clock generator in the vehicle, for example, can provide such a triggering signal in regular time intervals.

The apparatus 101 is also connected to a navigation system 103. Such a navigation system 103 is configured to determine the current position of the vehicle, in particular, using satellite signals and movement sensors (e.g., a gyroscope). Upon request of the apparatus 101, the navigation system 103 transmits the current position of the vehicle to the apparatus 101 where it is received by the receiving means 1011 and stored in the memory 1014. Alternatively, the navigation system 103 can also be configured to regularly provide the apparatus 101 with the current position of the vehicle.

The apparatus 101 further comprises a processing means (not shown) for processing the stored data. For example, the parameter data and/or the position data can be processed in order to obtain a specific format. In particular, the parameter data and the position data can be combined into a single data file that will be transmitted as a combined signal. The processing means can be part of the receiving means 1011, for example.

In addition, the apparatus 101 also comprises an initiating means 1012 for initiating transmitting the parameter data and a position correlating with a determined parameter value to an external server.

In the example shown in Fig. 1, the apparatus 101 is connected to a telephone 104. This connection, in particular, can be wireless. The apparatus 101 transmits the parameter data and the position data (particularly as combined signal) to the telephone 104, together with a control signal causing the telephone to send the data to an external server (not shown). In this way, transmittance of the data to the server is initiated. The telephone can be, for example, a mobile phone of the vehicle's driver.

The telephone 104 can also be configured to receive data (e.g., weather forecast data) from an external server. These data can then be transmitted to the apparatus 101 and possibly to the navigation system 103, either directly from the telephone 104 or via the apparatus 101. The apparatus 101 can also be configured to cause an output means such as a display or a text-to-speech device to output received data in order to inform the driver on the weather conditions. This can also be achieved by transmitting the data directly from the telephone to a corresponding output device without passing it to the apparatus 101 first.

In Fig. 2, the interplay between a vehicle and a server is illustrated. In this example, the vehicle is a car 201 travelling along a road 202. The car 201 is equipped with an apparatus for providing ambient parameter data. The vehicle 201 also comprises a navigation system, a telephone and at least one sensor for ambient parameter. The apparatus for providing ambient parameter data can be mounted in the vehicle and connected to the different other devices as, for example, illustrated in Fig. 1.

The ambient parameter sensor determines the value of an ambient parameter. This can be achieved, for example, by measuring a parameter directly (such a the temperature) or by determining a parameter indirectly. For example, if the desired parameter is a slip value that can take the values "yes" or "no" indicating that the road surface is slippery, this parameter can be determined based on the results obtained by utilizing information supplied by wheel speed sensors.

The parameter value as determined by the corresponding sensor is transmitted to an external server 203. Transmitting can be performed using, for example, the mobile phone of the car's driver. The external server 203 receiving the signal can be stationary, and, in particular, located in a meteorological office.

The navigation system of the car 201 is also in contact with a satellite 204 in order to determine the current position of the car 201 using the global positioning system (GPS). Additional movement sensors can be provided in the car 201 in order to increase the accuracy of the position data. The satellite 204 can also provide current images in the visible and infrared range to the external server 203 for further processing and combination with other weather data.

The ambient parameter data and the current position data (correlating with the parameter data) to be transmitted to the external server 203 can be determined in reaction to a corresponding triggering signal. A clock generator in the vehicle can provide such a triggering signal. Alternatively or additionally, the triggering signal for determining an ambient parameter may depend on the current position of the car 201. For example, the navigation system of a car can be configured so as to provide a corresponding triggering signal if the current position of the car 201 fulfils a predetermined criterion. For example, such a criterion could be fulfilled if the car 201 is crossing a bridge or if the car 201 is at a position having specific topographic features (e.g. elevation profile, wood region, etc.).

As a further alternative (or additionally), a triggering signal can be provided by a triggering station 205. Such triggering stations can be mounted along roads. For example, the triggering station 205 can comprise a beacon or mainly serve as toll station where passing vehicles are registered. If the car 201 passes such a station, a triggering signal is received by the car causing the apparatus for providing ambient parameter data to trigger a sensor to determine an ambient parameter.

In the case of triggering stations 205, the car 201 need not be equipped with a navigation system. For example, if a car passes a triggering station, the car is detected. Due to the triggering signal of the station, an ambient parameter value is determined and transmitted to the triggering station 205. From this station 205, the value is further transmitted to the external server 203 either together with an identifier of the station (if the server 203 already knows the position of the station) or together with the explicit position data of the station.

In another scenario, a triggering station can be mounted at a road. After a predetermined distance along the road, a data receiving station can be mounted. When a vehicle passes the triggering station, determining ambient parameter values is triggered. Then, at regular intervals or distances, a parameter value is determined and stored. When reaching the data receiving station, the list of values is transmitted to this station. Due to the regular intervals or distances at which the values where determined, a correlating position can be determined for each value based on the known position of the triggering station and the data receiving station. Then, the corresponding data pairs (each consisting of a parameter value and a corresponding position) are further transmitted to the external server.

In the server 203, the ambient parameter data are used to determine current weather data and weather forecast data. The ambient parameter data received from different vehicles can be combined with data from meteorological stations and also with satellite signals, e.g. satellite pictures. The server 203 is configured to process the received data to obtain composite weather data and to determine forecast data.

The current weather data and the weather forecast data can then be transmitted to a vehicle. This can be done, in particular, if a vehicle explicitly sends a corresponding request to the external server 203. Such a request can comprise information on what region the driver is interested in or can comprise position data of the vehicle to receive weather information and forecast data for the region surrounding this position.

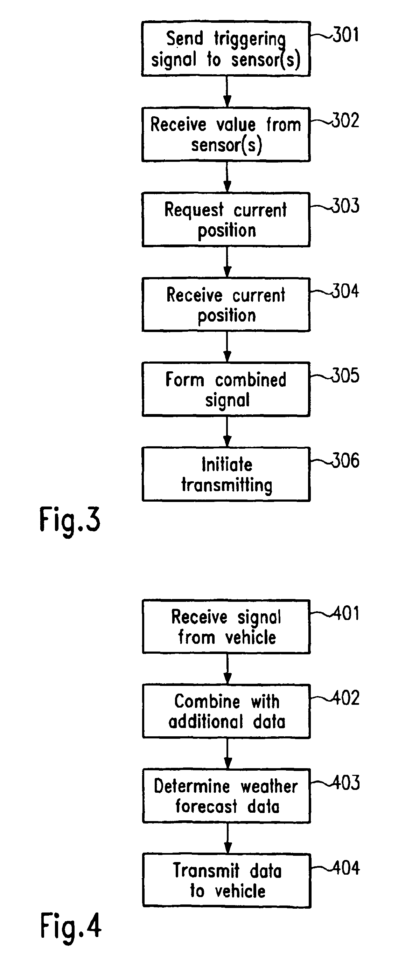

In Fig. 3, a flow diagram of an example illustrating a method for providing ambient parameter data of a vehicle is shown. According to the first step 301, a triggering signal is sent to one or several sensors of a vehicle. This step is performed by a corresponding apparatus, such as apparatus 101 in Fig. 1, mounted in a vehicle. This sending of a triggering signal can be initiated in different ways. For example, the apparatus can comprise or can be connected to a clock such that a triggering signal is sent regularly within predetermined time intervals. Alternatively or additionally, the apparatus itself can be triggered by an external device to send a triggering signal as already described above.

Possible sensors receiving such a triggering signal can be, for example, temperature, pressure, wind, precipitation or slip sensors. In the case of a car, the slip sensor can be part of a system mounted in the car that is responsible for preventing the car from slipping such as an electronic stability program (ESP).

The parameter sensor or parameter sensors receive the triggering signal and determine a corresponding parameter value.

In the following step 302, the parameter value as determined by a sensor is received by the apparatus for providing ambient parameter data. Then, in step 303, the current position of the vehicle (correlating with the parameter value) is requested. This can be achieved, for example, by sending a corresponding signal to a navigation system of a vehicle that can determine the current position using satellite data and/or movement sensors of the vehicle.

In the subsequent step 304, the current position data is received by the apparatus for providing ambient parameter data. The parameter sensor data and the position data are combined in step 305 to form a combined signal for simplification of the transmittance and the processing in the external server.

Then, in step 306, transmitting this combined signal is initiated. For example, the combined signal can be transmitted to a telephone that is connected to the apparatus together with an identification of the server (e.g., its telephone number) to which the signal is to be sent.

It is to be understood that the sensor data and the position data need not be combined, but can also be sent separately. In this case, it should be ensured that the correspondence of the different data (from the sensors and the position) is also provided to the external server such that the server knows which sensor data belong to which position.

In Fig. 4, the flow diagram of an example of a method for determining weather information by a server such as server 203 is shown.

First of all, in step 401, the server receives a signal from at least one vehicle, the signal comprising ambient parameter data. The data of the different parameters and possibly the position of the "source" vehicle can be combined in a single signal. In particular, the data in this signal can already be formatted for further processing by the server without additional steps. If this is not the case, the server has to reformat the data in order to obtain the data in a suitable form.

The server can be a server of a meteorological office configured to process weather data and, in particular, establish a weather forecast for providing corresponding weather information to a user or a consumer. For this, the server can comprise one or several data processing units and data storage means.

The ambient parameter data received from one or several vehicles can be combined in step 402 with additional data from meteorological stations and/or satellites. Of course, this step is optional and any processing of the ambient parameter data can also take place without considering additional data. When combining the vehicle data with data from meteorological stations, however, weather information with highly improved accuracy can be obtained.

Using the ambient parameter data of a vehicle and data from meteorological stations and/or satellites, weather forecast data is determined in step 403. This forecast data can comprise data regarding, for example, temperature, precipitation, road condition (e.g. black ice), visibility, etc. in the future. In particular, due to the vehicle data, the weather forecast data can be established on a smaller scale than with just the data from meteorological stations.

In the following step 404, the weather forecast data is transmitted to a vehicle. This step can be performed both on request by a vehicle or without such a request. Furthermore, different parts of the data can be transmitted to a vehicle. For example, a vehicle can explicitly request weather forecast data for a specific region or area; alternatively, weather forecast data of a region a vehicle is currently located in can be transmitted.

In addition, the transmitted data can also be restricted to a specific type of data. For example, if a driver wishes to know only forecast information regarding the road condition in a specific area, a corresponding signal comprising such a specific request could be sent from the vehicle to the external server that responds by transmitting only the desired information.

It is to be understood that the foregoing steps need not be performed for providing weather forecast data only, but can also serve for providing current and up-to-date weather information.

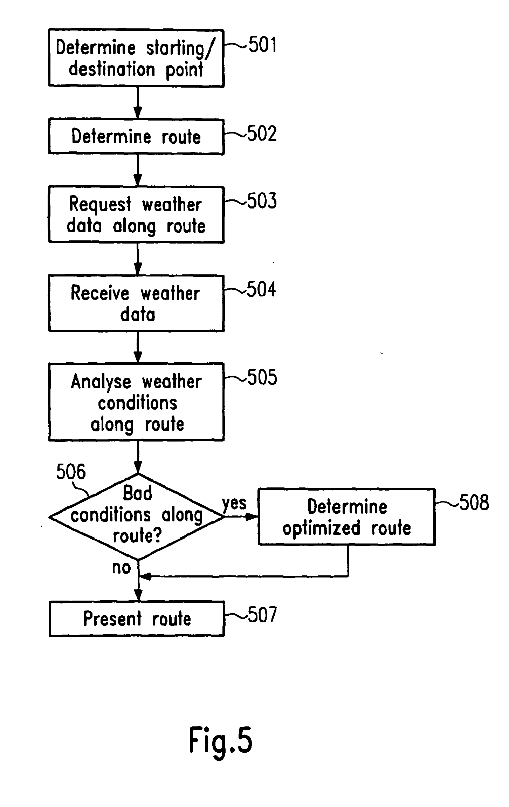

A flow diagram of an example of the functioning of a navigation system in a vehicle, particularly in a car, taking into account weather information data received from an external server is illustrated in Fig. 5.

In a traditional navigation system for road vehicles, a route between a starting and destination point is determined based on electronic road map data available to the navigation system. In view of this, in a first step 501, a starting point and a destination point for a route is determined.

Usually, the destination point is determined by requesting a user to enter a destination point, for example, by selecting a destination out of a corresponding list of destinations. The starting point can be determined in a similar way; alternatively, the starting point can be the current position of the vehicle that can be determined using, for example, satellite data using a system such as GPS.

In a following step 502, a route is determined by the navigation system using one or several road maps that are available in electronic form. For example, such a map can be stored in a memory of a navigation system or a CD or a DVD comprising road map data of a specific region can be present. The route can be determined using different criteria and constraints. Methods for determining a route by a navigation system are well known in the art.

In a following step 503, weather data for regions along the route determined by the navigation system is requested. This can be achieved by sending a request signal to a corresponding external server. In this request signal, the regions for which weather data (current data and/or forecast data) is desired can be specified, for example, by transmitting coordinates (position data) of the route or the names of larger cities along the route.

In response to this request, weather data from an external server are received in step 504 corresponding the request.

In the subsequent step 505, the navigation system checks for bad weather conditions along the route. This step can be performed using different criteria. For example, the navigation system can be configured such that black ice on the road is considered to be a bad condition. Other criteria (e.g., based on the visibility, precipitation, etc.) can be used as well.

After analyzing the weather conditions along the route in step 505, it is checked whether there are any bad conditions along the determined route in step 506.

If no bad conditions according to one or several predetermined criteria are detected, the route as already determined previously in step 502 is presented to the driver in step 507. This can be done acoustically and/or optically.

If, however, bad conditions are encountered at some place along the route, the navigation system determines an optimized route in step 508. For example, roads and/or entire regions in which bad conditions are present (e.g., black ice, bad visibility, etc.) get a penalty. In this way, an optimized route circumventing regions with bad weather conditions can be determined and presented to the driver in step 507.

It is also possible to present both the original route and the optimized route to the driver, possibly together with some weather information, so that the driver can select between different possibilities.

Instead of determining an optimized route in step 508, it is also possible that the weather conditions are taken into account for the originally determined route only when determining the journey time. Then, if at some region of the original route, bad weather conditions are present, the same route can still be presented to the driver, however, with increased journey time and possibly with corresponding weather information for the driver.

Further modifications and variations of the present invention as defined by the appended claims will be apparent to those skilled in the art. Accordingly, the description is to be construed as illustrative only and is for the purpose of teaching those skilled in the art on the general manner of carrying out the present invention. It is to be understood that the forms of the invention form and described herein are to be taken as the presently preferred embodiments.

## Claims

1. Method for determining a route by a navigation system of a road vehicle, comprising
- receiving (504) in the road vehicle weather information determined by an external server (203) using the steps of:
a) receiving (401) a value of at least one ambient parameter from at least one road vehicle, in particular, from a plurality of road vehicles,
b) receiving (401) a position correlating with the value of the at least one ambient parameter,
c) automatically determining (403) weather information data by using the value of the at least one ambient parameter of the at least one road vehicle and the position correlating with the value of the at least one ambient parameter,
d) transmitting (404) the weather information data from the external server (203) to the road vehicle,
- determining (505, 506, 508) a route taking into account the received weather information according to a predetermined weather condition criterion.

2. Method according to claim 1, wherein the step of transmitting weather information data is performed upon a request, in particular, comprising position data, of the road vehicle.

3. Method according to claim 1 or 2, wherein receiving weather information is preceded by initiating transmitting position data for which weather information is requested to an external server.

4. Method according to one of the preceding claims, wherein determining a route comprises determining a journey time taking into account the received weather information.

5. Method according to one of the preceding claims, wherein the received position has been determined via a position determining means of the at least one road vehicle, in particular, via a navigation system.

6. Method according to one of the claims 1 to 4, wherein the received position has been determined via an external position determining means.

7. Method according to one of the claims 1 to 5, wherein the value of the at least one parameter and the position are combined in one transmitted signal.

8. Method according to one of the preceding claims, wherein the value of the at least one ambient parameter has been determined using a thermometer, barometer, precipitation sensor, brightness sensor, slip sensor, sight range sensor, wind sensor, and/or weather radar of the at least one road vehicle.

9. Method according one of the preceding claims, wherein the weather information is received via a wireless data link.

10. Method according to one of the preceding claims, wherein the weather information is received and/or the route is determined in regular time intervals and/or dependent on a position of the road vehicle and/or upon receipt of an external triggering signal.

11. System comprising:
- an external server (203) being configured to perform the steps of:
(a) receiving a value of at least one ambient parameter from at least one road vehicle, in particular, from a plurality of road vehicles,
(b) receiving a position correlating with the value of the at least one ambient parameter,
(c) automatically determining weather information data using the value of the at least one ambient parameter of the at least one road vehicle and the position correlating with the value of the at least one ambient parameter,
(d) transmitting the weather information data to the road vehicle,
- a navigation system for a road vehicle, comprising:
(i) means for receiving weather information from the external server, and
(ii) means for determining a route taking into account the received weather information according to a predetermined weather condition criterion.

12. System according to claim 11, wherein the step of transmitting weather information data is performed upon a request, in particular, comprising position data, of the road vehicle.

13. System according to claim 11 or 12, wherein the navigation system comprises means to initiate transmitting position data for which weather information is requested to an external server.

14. System according to one of the claims 11 to 13, wherein the means for determining a route is configured to determine a journey time taking into account the received weather information.

15. System according to one of the claims 11 to 14, wherein the received position has been determined via a position determining means of the at least one road vehicle, in particular, via a navigation system.

16. System according to one of the claims 11 to 14, wherein the received position has been determined via an external position determining means.

17. System according to one of the claims 11 to 15, wherein the value of the at least one parameter and the position are combined in one transmitted signal.

18. System according to one of the claims 11 to 17, wherein the value of the at least one ambient parameter has been determined using a thermometer, barometer, precipitation sensor, brightness sensor, slip sensor, sight range sensor, wind sensor, and/or weather radar of the at least one road vehicle.

19. System according to one of the claims 11 to 18, wherein the means for receiving weather information is configured to receive the weather information via a wireless data link.

20. System according to one of the claims 11 to 19, wherein the means for receiving weather information data and/or the means for determining a route are configured to receive the weather information and/or determine the route in regular time intervals and/or dependent on a position of the road vehicle and/or upon receipt of an external triggering signal.

## Patentansprüche

1. Verfahren zum Bestimmen einer Route mit einem Navigationssystem eines Straßenfahrzeugs, das umfasst:
- Empfangen (504) von Wetterinformationen in dem Straßenfahrzeug, die von einem externen Server (203) bestimmt worden sind, unter Verwendung der folgenden Schritte:
a) Empfangen (401) eines Wertes wenigstens eines Umgebungsparameters von wenigstens einem Straßenfahrzeug, insbesondere einer Vielzahl von Straßenfahrzeugen,
b) Empfangen (401) einer Position, die mit dem Wert des wenigstens einen Umgebungsparameters korreliert,
c) automatisches Bestimmen (403) von Wetterinformations-Daten unter Verwendung des Wertes des wenigstens einen Umgebungsparameters des wenigstens einen Straßenfahrzeugs und der mit dem Wert des wenigstens einen Umgebungsparameters korrelierenden Position,
d) Senden (404) der Wetterinformations-Daten von dem externen Server (203) zu dem Straßenfahrzeug,
- Bestimmen (505, 506, 508) einer Route unter Berücksichtigung der empfangenen Wetterinformationen entsprechend einem vorgegebenen Wetterbedingungs-Kriterium.

2. Verfahren nach Anspruch 1, wobei der Schritt des Sendens von Wetterinformations-Daten auf eine Anforderung hin durchgeführt wird, die insbesondere Positionsdaten des Straßenfahrzeugs umfasst.

3. Verfahren nach Anspruch 1 oder 2, wobei dem Empfangen von Wetterinformationen das Auslösen des Sendens von Positionsdaten, für die Wetterinformationen angefordert werden, zu einem externen Server vorangeht.

4. Verfahren nach einem der vorangehenden Ansprüche, wobei Bestimmen einer Route Bestimmen einer Fahrzeit unter Berücksichtigung der empfangenen Wetterinformationen umfasst.

5. Verfahren nach einem der vorangehenden Ansprüche, wobei die empfangene Position über eine Positionsbestimmungseinrichtung des wenigstens einen Straßenfahrzeugs, insbesondere über ein Navigationssystem, bestimmt worden ist.

6. Verfahren nach einem der Ansprüche 1 bis 4, wobei die empfangene Position über eine externe Positionsbestimmungseinrichtung bestimmt worden ist.

7. Verfahren nach einem der Ansprüche 1 bis 5, wobei der Wert des wenigstens einen Parameters und die Position in einem gesendeten Signal kombiniert werden.

8. Verfahren nach einem der vorangehenden Ansprüche, wobei der Wert des wenigstens einen Umgebungsparameters unter Verwendung eines Thermometers, Barometers, Niederschlagsensors, Helligkeitssensors, Schlupfsensors, Sichtweitensensors, Windsensors und/oder Wetterradars des wenigstens einen Straßenfahrzeugs bestimmt worden ist.

9. Verfahren nach einem der vorangehenden Ansprüche, wobei die Wetterinformationen über eine Drahtlos-Datenverbindung empfangen werden.

10. Verfahren nach einem der vorangehenden Ansprüche, wobei Empfang der Wetterinformationen und/oder Bestimmung der Route in regelmäßigen Zeitintervallen und/oder in Abhängigkeit von einer Position des Straßenfahrzeugs und/oder bei Empfang eines externen Auslösesignals durchgeführt werden/wird.

11. System, das umfasst:
- einen externen Server (203), der so konfiguriert ist, dass er die folgenden Schritte durchführt:
a) Empfangen eines Wertes wenigstens eines Umgebungsparameters von wenigstens einem Straßenfahrzeug, insbesondere einer Vielzahl von Straßenfahrzeugen,
b) Empfangen einer Position, die mit dem Wert des wenigstens einen Umgebungsparameters korreliert,
c) automatisches Bestimmen von Wetterinformations-Daten unter Verwendung des Wertes des wenigstens einen Umgebungsparameters des wenigstens einen Straßenfahrzeugs und der mit dem Wert des wenigstens einen Umgebungsparameters korrelierenden Position,
d) Senden der Wetterinformations-Daten zu dem Straßenfahrzeug,
- ein Navigationssystem für ein Straßenfahrzeug, das umfasst:
(I) eine Einrichtung zum Empfangen von Wetterinformationen von dem externen Server, und
(II) eine Einrichtung zum Bestimmen einer Route unter Berücksichtigung der empfangenen Wetterinformationen entsprechend einem vorgegebenen Wetterbedingungs-Kriterium.

12. System nach Anspruch 11, wobei der Schritt des Sendens von Wetterinformations-Daten auf eine Anforderung hin durchgeführt wird, die insbesondere Positionsdaten des Straßenfahrzeugs umfasst.

13. System nach Anspruch 11 oder 12, wobei das Navigationssystem eine Einrichtung umfasst, die Senden von Positionsdaten, für die Wetterinformationen angefordert werden, zu einem externen Server auslöst.

14. System nach einem der Ansprüche 11 bis 13, wobei die Einrichtung zum Bestimmen einer Route so konfiguriert ist, dass sie eine Fahrzeit unter Berücksichtigung der empfangenen Wetterinformationen bestimmt.

15. System nach einem der Ansprüche 11 bis 14, wobei die empfangene Position über eine Positionsbestimmungseinrichtung des wenigstens einen Straßenfahrzeugs, insbesondere über ein Navigationssystem, bestimmt worden ist.

16. System nach einem der Ansprüche 11 bis 14, wobei die empfangene Position über eine externe Positionsbestimmungseinrichtung bestimmt worden ist.

17. System nach einem der Ansprüche 11 bis 15, wobei der Wert des wenigstens einen Parameters und die Position in einem gesendeten Signal kombiniert werden.

18. System nach einem der Ansprüche 11 bis 17, wobei der Wert des wenigstens einen Umgebungsparameters unter Verwendung eines Thermometers, Barometers, Niederschlagsensors, Helligkeitssensors, Schlupfsensors, Sichtweitensensors, Windsensors und/oder Wetterradars des wenigstens einen Straßenfahrzeugs bestimmt worden ist.

19. System nach einem der Ansprüche 11 bis 18, wobei die Einrichtung zum Empfangen von Wetterinformationen so konfiguriert ist, dass sie die Wetterinformationen über eine Drahtlos-Datenverbindung empfängt.

20. System nach einem der Ansprüche 11 bis 19, wobei die Einrichtung zum Empfangen von Wetterinformations-Daten und/oder die Einrichtung zum Bestimmen einer Route so konfiguriert sind/ist, dass sie Empfangen der Wetterinformationen und/oder Bestimmen der Route in regelmäßigen Zeitintervallen und/oder in Abhängigkeit von einer Position des Straßenfahrzeugs und/oder bei Empfang eines externen Auslösesignals durchführen/durchführt.

## Revendications

1. Procédé permettant de déterminer un itinéraire grâce au système de navigation d'un véhicule routier, comprenant :
- la réception (504), dans le véhicule routier, d'informations météorologiques déterminées par un serveur externe (203) en utilisant les étapes suivantes :
a) la réception (401) d'une valeur concernant au moins un paramètre ambiant provenant d'au moins un véhicule routier et provenant en particulier d'une pluralité de véhicules routiers,
b) la réception (401) d'une position venant en corrélation avec la valeur du ou des paramètres ambiants,
c) la détermination automatique (403) de données d'informations météorologiques en utilisant la valeur du ou des paramètres ambiants provenant du ou des véhicules routiers, ainsi que la position venant en corrélation avec la valeur du ou des paramètres ambiants,
d) la transmission (404) au véhicule routier des données d'informations météorologiques provenant du serveur externe (203),
- la détermination (505, 506, 508) d'un itinéraire en prenant en compte les informations météorologiques reçues en fonction d'un critère prédéfini de conditions météorologiques.

2. Procédé selon la revendication 1, dans lequel l'étape de transmission des données d'informations météorologiques est effectuée sur une demande comprenant, en particulier, les données de position du véhicule routier.

3. Procédé selon la revendication 1 ou 2, dans lequel la réception des informations météorologiques est précédée par le déclenchement de la transmission des données de position pour lesquelles sont demandées à un serveur externe les informations météorologiques.

4. Procédé selon l'une des revendications précédentes, dans lequel la détermination d'un itinéraire comprend la détermination d'une heure dans la journée en prenant en compte les informations météorologiques reçues.

5. Procédé selon l'une des revendications précédentes, dans lequel la position reçue a été déterminée par l'intermédiaire d'un moyen de détermination de position du ou des véhicules routiers, en particulier par l'intermédiaire d'un système de navigation.

6. Procédé selon l'une des revendications 1 à 4, dans lequel la position reçue a été déterminée par l'intermédiaire d'un moyen externe de détermination de position.

7. Procédé selon l'une des revendications 1 à 5, dans lequel les valeurs du ou des paramètres et de la position sont combinées en un seul signal transmis.

8. Procédé selon l'une des revendications précédentes, dans lequel la valeur du ou des paramètres ambiants a été déterminée en utilisant un thermomètre, un baromètre, un capteur de précipitations, un capteur de luminosité, un capteur de glissement, un capteur de plage de vision, un capteur de vent et/ou un radar météorologique du ou des véhicules routiers.

9. Procédé selon l'une des revendications précédentes, dans lequel les informations météorologiques sont reçues par l'intermédiaire d'une liaison de données sans fil.

10. Procédé selon l'une des revendications précédentes, dans lequel les informations météorologiques sont reçues, et/ou l'itinéraire est déterminé, à des intervalles réguliers dans le temps et/ou en fonction de la position du véhicule routier et/ou lors de la réception d'un signal externe de déclenchement.

11. Système comprenant :
- un serveur externe (203) configuré pour exécuter les étapes suivantes :
a) la réception d'une valeur concernant au moins un paramètre ambiant provenant d'au moins un véhicule routier et provenant, en particulier, d'une pluralité de véhicules routiers,
b) la réception d'une position venant en corrélation avec la valeur du ou des paramètres ambiants,
c) la détermination automatique de données d'informations météorologiques en utilisant la valeur du ou des paramètres ambiants provenant du ou des véhicules routiers, ainsi que la position venant en corrélation avec la valeur du ou des paramètres ambiants,
d) la transmission au véhicule routier des données d'informations météorologiques,
- un système de navigation, destiné à un véhicule routier, comprenant :
(i) un moyen permettant de recevoir des informations météorologiques provenant du serveur externe, et
(ii) un moyen permettant de déterminer un itinéraire en prenant en compte les informations météorologiques reçues en fonction d'un critère prédéfini de conditions météorologiques.

12. Système selon la revendication 11, dans lequel l'étape de transmission des données d'informations météorologiques est effectuée sur une demande comprenant, en particulier, les données de position du véhicule routier.

13. Système selon la revendication 11 ou 12, dans lequel le système de navigation comprend un moyen permettant de déclencher la transmission des données de position pour lesquelles sont demandées à un serveur externe les informations météorologiques.

14. Système selon l'une des revendications 11 à 13, dans lequel le moyen de détermination d'un itinéraire est configuré pour déterminer une heure dans la journée en prenant en compte les informations météorologiques reçues.

15. Système selon l'une des revendications 11 à 14, dans lequel la position reçue a été déterminée par l'intermédiaire d'un moyen de détermination de position du ou des véhicules routiers, en particulier par l'intermédiaire d'un système de navigation.

16. Système selon l'une des revendications 11 à 14, dans lequel la position reçue a été déterminée par l'intermédiaire d'un moyen externe de détermination de position.

17. Système selon l'une des revendications 11 à 15, dans lequel les valeurs du ou des paramètres et de la position sont combinées en un seul signal transmis.

18. Système selon l'une des revendications 11 à 17, dans lequel la valeur du ou des paramètres ambiants a été déterminée en utilisant un thermomètre, un baromètre, un capteur de précipitations, un capteur de luminosité, un capteur de glissement, un capteur de plage de vision, un capteur de vent et/ou un radar météorologique du ou des véhicules routiers.

19. Système selon l'une des revendications 11 à 18, dans lequel le moyen de réception des informations météorologiques est configuré pour recevoir les informations météorologiques par l'intermédiaire d'une liaison de données sans fil.

20. Système selon l'une des revendications 11 à 19, dans lequel le moyen de réception des données d'informations météorologiques et/ou le moyen de détermination d'un itinéraire sont configurés pour recevoir les informations météorologiques et/ou pour déterminer l'itinéraire à des intervalles réguliers dans le temps et/ou en fonction d'une position du véhicule routier et/ou lors de la réception d'un signal externe de déclenchement.
